# EUROPÄISCHE PATENTSCHRIFT

(11) **EP 1 089 926 B1**
(45) Veröffentlichungstag und Bekanntmachung des Hinweises auf die Patenterteilung: **03.03.2004**
(21) Anmeldenummer: 99927865.8
(22) Anmeldetag: 03.06.1999
(51) Int. Cl.: B65G 47/29, B65G 47/88, B65G 23/38, B65B 43/56

(54) **FÖRDERSTRECKENANORDNUNG FÜR MIT ARTIKELN ODER SCHÜTTGUT ZU BEFÜLLENDE BEHÄLTER IN EINER FÜLLSTATION**
CONVEYOR SECTION ARRANGEMENT FOR CONTAINERS BEING FILLED WITH ITEMS OR BULK MATERIAL AT A FILLING STATION
CONFIGURATION DE VOIE DE TRANSPORT POUR RECIPIENTS A REMPLIR D'ARTICLES OU DE PRODUITS EN VRAC DANS UN POSTE DE REMPLISSAGE

(30) Priorität: 05.06.1998 DE 19825328
(43) Veröffentlichungstag der Anmeldung: 11.04.2001
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP1999/003857
(87) Internationale Veröffentlichungsnummer: WO 1999/064331

(56) Entgegenhaltungen:
- WO-A-96/11157
- DE-A- 3 303 332
- US-A- 4 962 625
- US-A- 4 991 708

## Beschreibung

Die Erfindung betrifft eine Kommissionierautomat-Anordnung mit einer Füllstation und einer Förderstrecke mit einem Förderer für auf dem Förderer geförderte, mit Artikeln oder Schüttgut in der Füllstation über einen Fülltrichter zu befüllende, sich in der Füllstellung befindliche Behälter, und zwar insbesondere denjenigen Teil einer Kommissionierautomat-Übergabestation, der die Versandbehälter der Füllstation zuführt, sie für die Dauer der Artikel- bzw. Produktübergabe unter dem Füll- oder Übergabetrichter positioniert und anschließend von der Füllstation wieder abführt.

Nach dem Stand der Technik werden die Behälter im Bereich der Kommissionierautomatübergabe über einen stetig laufenden Fördergurt bewegt. Die Vereinzelung der ankommenden Behälter wird durch eine vor der Übergabestation angeordnete Klemmvorrichtung bewerkstelligt, welche den jeweils vordersten Behälter erfaßt und erst kurz vor Freiwerden der Füllstation weiterlaufen läßt. Direkt unter dem der ersten Klemmvorrichtung nachgeordneten Füll- bzw. Übergabetrichter befindet sich beidseits des Fördergurts eine zweite Klemmvorrichtung, die den ankommenden Behälter erfaßt und ihn bis zm Abschluß der Befüllung in der richtigen Position festhält. Anschließend wird der befüllte Behälter losgelassen, vom kontinuierlich angetriebenen Fördergurt reibschlüssig mitgenommen und aus dem Übergabebereich transportiert. Die Behälterwechselzeit und damit in vielen Fällen die Durchsatzleistung der gesamten Kommissionieranlage hängen somit von der Geschwindigkeit ab, mit der die Behälter auf dem Fördergurt reibschlüssig weitergetaktet werden.

Aufgabe der Erfindung ist die Schaffung einer Anordnung der eingangs genannten Art, welche mit Hilfe einfacher Mittel ein schnelleres Weitertakten der Kommissionierbehälter im Bereich der Füllstation erlaubt und auch eine exakte Positionierung der Behälter in der Füllstellung unter dem Fülltrichter gestattet.

Gelöst wird die der Erfindung zugrundeliegende Aufgabe durch eine Kommissionierautomat-Anordnung mit den im Anspruch 1 angegebenen Merkmalen.

Vorteilhaft weitergebildet wird der Erfindungsgegenstand durch die Merkmale der Ansprüche 2 bis 13.

Wesen der Erfindung ist die besondere Ausgestaltung einer Kommissionierautomat-Anordnung mit einer Füllstation und einer Förderstrecke mit einem Förderer, wobei die Förderstrecke im unmittelbaren Bereich vor, in und nach der Füllstation auch zumindest einen umlaufenden Zahnriemen- oder Kettentrieb mit eigenem intermittierenden Stellantrieb und voneinander beabstandeten Behälter-Eingriffsnoppen aufweist, welche mit auf der Förderstrecke ankommenden oben offenen Behältern in einen Eingriff bringbar sind und durch welche mit Hilfe einer besonderen Ansteuerung des Stellantriebs die Behälter vereinzelt sowohl in die Füllstellung als auch nach einem Befüllen aus der Füllstellung beschleunigt getaktet und gegebenenfalls der Förderstrecke wieder zugeführt werden können. Die Behälter werden an der Behälterrückwand durch die Behälter-Eingriffsnoppen ruckfrei hintergriffen und dann beschleunigt.

Das grundsätzliche Takten eines Fließbandes bei einer Fließbandfertigung ist beispielsweise aus WO-A-96/11157 bekannt. Für ein beschleunigtes schnelles Takten ist die bekannte Vorrichtung nicht vorgesehen und ausgelegt. Gleiches gilt für die aus US-A-4 962 625 bekannte Vorrichtung, bei welcher die Behälter bereits befüllt sind und keine Füllstation nach Art der vorliegenden Erfindung aufweist.

In einer bevorzugten Ausführungsvariante der Erfindung ist der umlaufende Zahnriemen- oder Kettentrieb auf beiden Breitseiten des Förderers angeordnet und axialsymmetrisch zum Förderer aufgebaut.

In einer weiteren Ausführungsvariante kann ein einziger umlaufender Zahnriemen- oder Kettentrieb im unmittelbaren Bereich vor, in und nach der Füllstation mit auf dem Umlauf vorzugsweise sechs gleich beabstandeten Behälter-Eingriffsnoppen vorgesehen sein.

Es kann ein einziger durchgehender Förderer vor, in und nach der Füllstation vorzugsweise als Gurtförderer bzw. Riementrieb zwischen einem axial symmetrisch aufgebauten umlaufenden Zahnriemen- oder Kettentrieb ausgebildet sein.

Alternativ kann aber auch der Förderer im Bereich des umlaufenden Zahnriemen- oder Kettentriebs unterbrochen sein, ohne letzteren zu überlappen, und einen separaten Gurtförderer bzw. Riementrieb mit einem eigenen Antrieb besitzen.

Der eingangsseitige Förderer kann nicht nur ein durchgehendes Förderband, sondern auch eine Treibrollenbahn oder eine Staurollenbahn sein.

Unter Treibrollenbahn versteht man einen staudruckbehafteten Reibstauförderer mit kontinuierlich angetriebenen Rollen.
Der vorderste Behälter schlägt im gestauten Zustand gegen eine Behältersperre an. Die gestauten Behälter liegen im Reibstau dicht aneinander.

Unter einer (Hub-)Staurollenbahn versteht man einen staudrucklosen Förderer mit angetriebenen Rollen, bei dem die (angehobenen) Behälter im gestauten Zustand einen definierten Abstand zueinander einnehmen und bei dem eine Behältersperre nicht zwingend erforderlich ist, jedoch mit Vorteil für eine genauere Positionierung vorgesehen sein kann.

Der Gurtförderer bzw. Riementrieb besitzt zweckmäßigerweise im Bereich der Füllstellung eine stationäre obere Gleitfläche, wobei der Gurtförderer bzw. Riementrieb im Bereich der Gleitfläche über Umlenkrollen nach unten parallelversetzt sein kann.

In einer weiteren Ausführungsvariante kann der Förderer im Bereich des umlaufenden Zahn- oder Kettentriebs unterbrochen sein und zwei weitere Gurtförderer bzw. Riementriebe mit jeweils eigenem Antrieb besitzen, wobei der eine Gurtförderer bzw. Riementrieb vor der Füllstellung und der andere Gurtförder bzw. Riementrieb nach der Füllstellung angeordnet ist und im Bereich der Füllstellung eine stationäre Gleitfläche angeordnet ist.

Der eingangsseitige Förderer besitzt zweckmäßigerweise vor dem Zahnriemen- oder Kettentrieb eine Behältersperre, welche in die Bewegungsbahn der geförderten Behälter gestellt werden bzw. die Bewegungsbahn der geförderten Behälter freigeben kann.

Die Behältersperre ist bevorzugt ein pneumatisch verschwenk- bzw. verschiebbarer Riegel und insbesondere zwischen zwei Laufrollen am Ende des eingangsseitigen Förderers angeordnet, welche vorzugsweise dann als Staurollenbahn ausgebildet ist.

Beide Laufrollen können einen größeren Durchmesser besitzen als die restlichen Laufrollen des Förderers und bilden dann sogenannte Beschleunigungsrollen. Die Funktion der Beschleunigungsrollen ergibt sich daraus, daß durch den Durchmesserunterschied zwischen dem Antrieb (Kleiner Durchmesser) und dem Abtrieb (Größerer Durchmesser) eine entsprechend höhere Umfangsgeschwindigkeit der letzten beiden Treibrollen gegenüber den anderen Rollen erzeugt wird, welche den vordersten Behälter bei Lösen der Sperre vom benachbarten Behälter beschleunigt entfernt und einen Abstand zu letzterem einrichtet, so daß die gelöste Sperre wieder in die Sperrstellung bewegt werden kann, bevor der benachbarte Behälter nachgerückt ist. Der vorderste Behälter wird somit "vereinzelt". Der zwischen den Behältern erzeugte Abstand reicht aus, um insbesondere einer Lichtschranke die Zeit zu geben, ein Signal für eine Sperrbetätigung der pneumatischen Sperre vor dem Ankommen des nachfolgenden Behälters zu verarbeiten.

Beide in der unmittelbaren Nachbarschaft der Behältersperre befindlichen Rollen können auch einen eigenen Antrieb besitzen. Dann kann dieser Antrieb mit höherer Drehzahl als der Antrieb der restlichen Laufrollen betrieben werden, um den vorgenannten Abstand zwischen den Behältern einzurichten, und es können sämtliche Rollen den gleichen Durchmesser besitzen.

Wesen der Erfindung mithin ist, daß die nach dem eingangs diskutierten Stand der Technik reibschlüssige Mitnahme der Behälter durch eine formschlüssige Mitnahme ersetzt wird, und zwar durch die erfindungsgemäß vorgesehenen Behälter-Eingriffsnoppen in Verbindung mit einem (schlupffreien) Zahnriemen- oder Kettentrieb mit eigenem dynamischen Antriebsmotor, welche bei Stillstand einerseits ein exaktes Positionieren bzw. Anhalten der Behälter vor und in der Füllstation bei gleichzeitig kontinierlich weiterlaufendem Förderband erlauben und andererseits einen angehaltenen und insbesondere mit Artikel befüllten Behälter hintergreifen und aus dem Stillstand heraus schnell beschleunigen, und zwar unter Eingriff eines Behälter-Eingriffnoppens auf der Behälterrückseite, welche der Förderrichtung abgewandt ist. Da die Positionierung der Behälter formschlüssig, und nicht durch Klemmung der Behälter wie nach dem Stand der Technik erfolgt, können nicht nur vergleichweise stabile Behälter wie zum Beispiel aus Kunststoff, sondern auch Behälter aus empfindlicherem Material, wie zum Beispiel aus Pappkarton, erfindungsgemäß verwendet werden.

Es versteht sich, daß der Abstand in Förderrichtung zwischen zwei Behälter-Eingriffsnoppen mehr als die Behälterlänge, vorzugsweise geringfügig mehr als die Behälterlänge beträgt.

Es versteht sich ferner, daß, sofern zwei seitliche intermittierend betriebene Zahnriemen- oder Kettentrieb-Hälften mit dazwischen liegendem kontinuierlich betriebenen Förderband vorgesehen sind, der Abstand zwischen zwei zugeordneten auf gleicher Höhe in Förderrichtung liegenen Behälter-Eingriffsnoppen jeder Hälfte kleiner ist als die Behälterbreite, so daß ein Behälter bei einem Fördern durch die eingreifenden zugeordneten seitlichen Noppen nicht verdreht, sondern in Förderrichtung längsversetzt wird.

Der Antrieb des Zahnriemen- oder Kettentriebs ist bevorzugt ein (dynamischer) Elektro-Stellmotor, welcher intermittierend jeweils um eine Noppenteilung in Betrieb genommen wird. Der Riemen oder die Kette wird also jeweils um eine Noppenteilung mit vergleichsweise großer Beschleunigung weiterbewegt und anschließend für die Dauer der Behälterfüllung unter dem Fülltrichter verharren gelassen, während sich das dazwischenliegende Förderband einer durchgehenden Förderstrecke oder eines separaten Riementriebs bzw. Fördergurts kontinuierlich stetig weiterbewegt. Aufgrund der beschleunigten Zu- und Abführung bei gleichzeitiger exakter Positionierung eines Behälters unter dem Fülltrichter kann die Behälterwechselzeit und mithin die Durchsatzleistung der Gesamtanlage gegenüber dem eingangs genannten Stand der Technik nahezu verdoppelt werden, und zwar ohne großen Aufwand. Die bauliche Kompaktheit der Förderstrecke bleibt hierbei unverändert erhalten.

Die Erfindung wird nachfolgend anhand von Ausführungsbeispielen unter Bezugnahme auf die beigefügte Zeichnung näher beschrieben; es zeigen:
- Fig. 1: in einer schematischen Seitenansicht eine Anordnung einer Förderstrecke einer Kommissionieranlage im Bereich einer Füllstation, in welcher offene auf der Förderstrecke geförderte Behälter mit Artikeln bzw. Produkten befüllt und anschließend einer Versandstation zugeführt werden, wobei ein separater kontinuierlicher Riementrieb in der Füllstation vorgesehen ist, welcher zwischen zwei Hälften eines intermittierenden Zahnriementriebs mit Behälter-Eingriffsnoppen verläuft,
- Fig. 2: die Anordnung nach Figur 1 in einer schematischen Draufsicht,
- Fig. 3: die Anordnung nach Figur 1 mit zusätzlicher schematischer Darstellung der Füllstation und Darstellung von auf der Förderstrecke geförderten bzw. angekommenen Behältern unmittelbar vor der Füllstation,
- Fig. 4: die Anordnung nach Figur 3 unmittelbar nach einer Zuführung lediglich des vordersten Behälters in den Eingangsbereich der Füllstation,
- Fig. 5: die Anordnung nach Figur 4 unmittelbar nach einer beschleunigten Weitertaktung des vordersten Behälters in die Füllstation mit Positionierung des Behälters unter dem Fülltrichter, wobei gleichzeitig ein nachrückender Behälter im Eingangsbereich der Füllstation in einer Zwischenstellung gezeigt ist,
- Fig. 6: die Anordnung nach Figur 5 während eines Befüllens des vordersten Behälters mit Artikeln, wobei der nachrückende Behälter seine vorderste Anschlagstellung im Eingangsbereich der Füllstation eingenommen hat,
- Fig. 7: die Anordnung nach Figur 6 nach einem Befüllen des vordersten Behälters und unmittelbar nach einem beschleunigten Weitertakten in den Ausgangsbereich der Füllstation, wobei gleichzeitig der nachrückende Behälter exakt in die Füllstellung beschleunigt eingetaktet wird, und ein weiterer Behälter in den Eingangsbereich der Füllstation nachrückt,
- Fig. 8: die Anordnung einer Förderstrecke nach Figur 1 mit zusätzlicher Anordnung einer stationären Gleitfläche im Bereich der Füllstellung und zusätzlicher Umlenkung des Obertrums des Riementriebs bzw. Fördergurts unter die stationäre Gleitfläche,
- Fig. 9: die Anordnung nach Figur 8 in einer schematischen Draufsicht ähnlich Figur 2,
- Fig. 10: eine Anordnung einer Förderstrecke ähnlich den Figuren 1 und 8 in anderer Ausführungsvariante mit zwei Fördergurten bzw. Riementrieben im Eingangsbereich und im Ausgangsbereich der Füllstation, und
- Fig. 11: die Anordnung nach Figur 10 in einer schematischen Draufsicht ähnlich den Figuren 2 und 10.

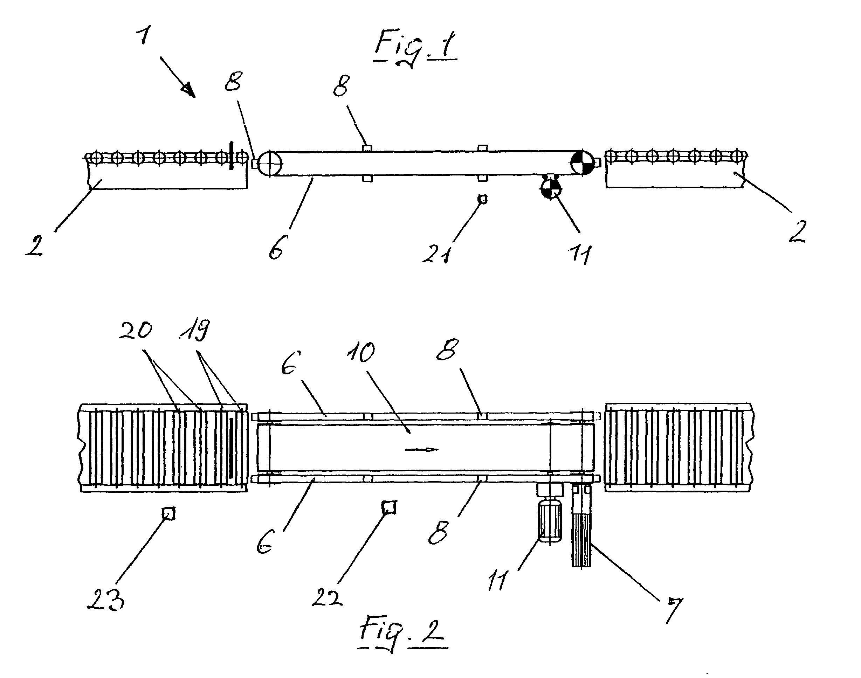

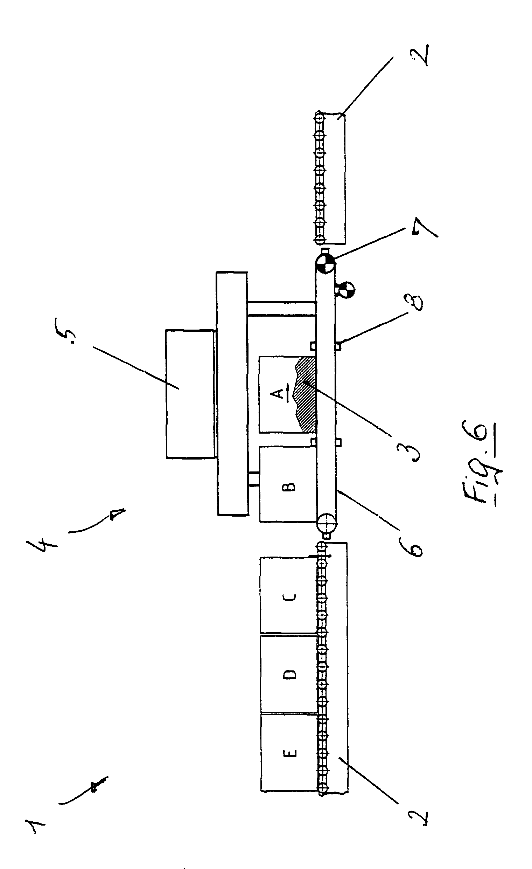

Gemäß den Figuren 1 bis 7 umfaßt eine hier nicht näher interessierden Kommissionieranlage mit zum Beispiel Schnelldrehautomaten, Artikellagerregalen, Regalbediengeräten, etc. unter anderem auch eine Anordnung 1 einer Förderstrecke 2 für (Versand-)Behälter bzw. Überkartons von einer Behältervorratsstation zu einer Behälterversandstation mit einer zwischengeordneten Füllstation 4, in der kommissionierte Artikel 3 oder Schüttgut über einen Fülltrichter 5 in einen auf der Förderstrecke 2 geförderten, unter dem Fülltrichter angeordneten, oben offenen Behälter abgefüllt werden, wie dies insbesonderer der Figur 6 zu entnehmen ist.

Die Förderstrecke 2, welche grundsätzlich beispielsweise ein durchgehendes Förderband, eine Treibrollenbahn oder eine Staurollenbahn sein kann, besitzt im unmittelbaren Bereich vor, in und nach der Füllstation 4 rechts und links, d.h. beidseits des Förderbands oder dergleichen einen Zahnriemenoder Kettentrieb 6 mit einem separaten dynamischen Antrieb in Form eines intermittierenden Stellantriebs 7, welcher einen schlupffreien beschleunigten Weitertakt eines oder mehrerer Behälter besorgt, die sich im unmittelbaren Bereich der Füllstation 4 befinden, wie nachfolgend noch im einzelnen erläutert wird.

Insbesondere besitzt der Zahnriemen- oder Kettentrieb 6 voneinander gleich beabstandete Behälter-Eingriffsnoppen 8, im Ausführungsbeispiel sechs Noppen, durch welche auf der Förderstrecke 2 ankommende oben offene Behälter A, B, C, D, E vereinzelt sowohl in die Füllstellung als auch nach einem Befüllen aus der Füllstellung beschleunigt getaktet und ausgangsseitig der Förderstrecke 2 wieder zugeführt werden.

Der umlaufende Zahnriemen- oder Kettentrieb 6 auf beiden Breitseiten der Förderstrecke ist axialsymmetrisch zur Förderstrecke dergestalt aufgebaut, daß zugeordnete Noppen 8 auf jeder Seite in Förderrichtung der Behälter auf gleicher Höhe bzw. Länge liegen.

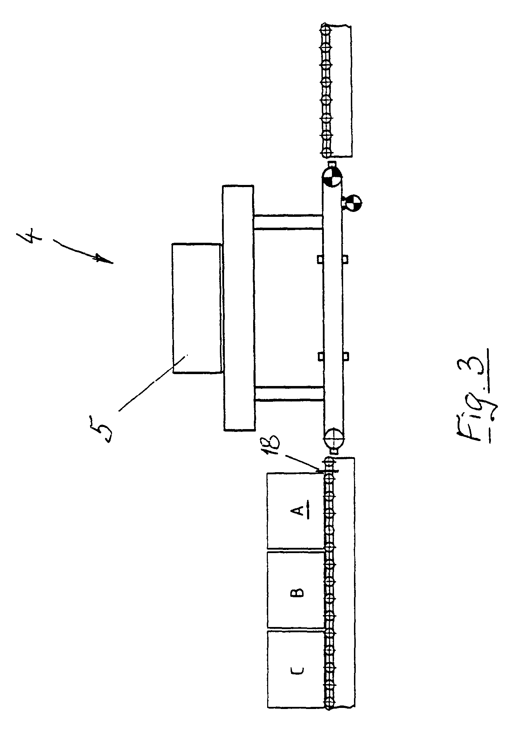

Wenn auch die Förderstrecke 2 insgesamt durchgehend ausgebildet sein kann, so ist gemäß den Figuren 1 und 2 die Förderstrecke 2 im Bereich des umlaufenden Zahnriemen- oder Kettentriebs 6 unterbrochen und weist an dieser Stelle einen eigenen zwischen dem Zahnriemen- oder Kettentrieb 6 gelegenen Gurtförderer bzw. Riementrieb 10 mit einem eigenen Antrieb 11 auf.

Die Förderstrecke 2 besitzt vor dem Zahnriemen- oder Kettentrieb 6 eine Behältersperre 18, welche in die Bewegungsbahn der geförderten Behälter gestellt werden bzw. die Bewegungsbahn der geförderten Behälter freigeben kann.

Die Behältersperre 18 ist bevorzugt ein pneumatisch höhenverstellbarer, insbesondere ein verschwenk- oder verschiebbarer Querriegel, welcher sich zwischen den letzten beiden Laufrollen 19 am Ende der eingangsseitigen Förderstrecke 2 befindet.

Die beiden Laufrollen 19 besitzen im Betrieb eine größere Umfangsgeschwindigkeit als die restlichen Laufrollen 20 (bzw. Umlenkantriebsrollen) der eingangsseitigen Förderstrecke, die als Staurollenbahn (bzw. Förderband) ausgebildet ist. Die beiden Laufrollen 19 sind mithin als Beschleunigungsrollen ausgebildet, wobei diese im Betrieb eine größere Fördergeschwindigkeit für die Behälter als die Staurollenbahn (bzw. das Förderband) entwickeln. Sowohl die Laufrollen 19 als auch die restlichen Laufrollen 20 (bzw. Umfangsantriebsrollen) können einen gemeinsamen Antrieb besitzen.

Die beiden Laufrollen 19 können aber auch einen eigenen Antrieb besitzen. Die eingangsseitige Förderstrecke kann als Treibrollenbahn für Reibstau oder allerdings auch als staudrucklose Staurollenbahn ausgebildet sein, wobei dann vom letzten Stauplatz ohne Behältersperre und unter Umständen auch ohne Beschleunigungsrollen 19 entsprechend vorzugsweise im Block weggetaktet werden kann (Hubstaurollenbahn).

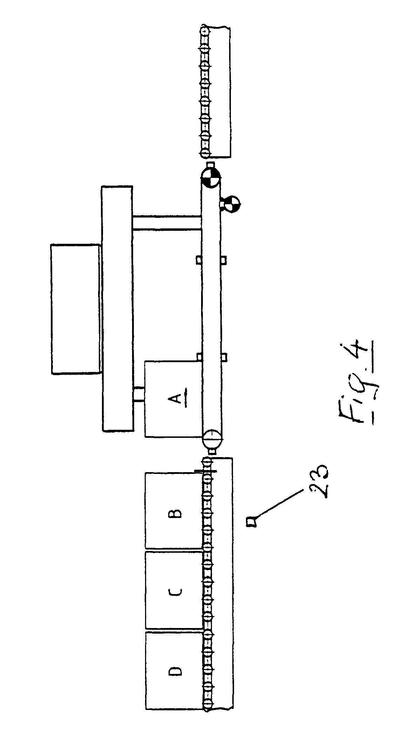

Im folgenden wird die Funktion der als Treibrollenbahn für Reibstau ausgebildeten Förderstrecke 2 nach den Figuren 1 und 2 anhand der Figuren 3 bis 7 beschrieben.

Gemäß Figur 3 ist die Förderstrecke 2 unmittelbar vor der Füllstation 4 durch eine Behältersperre 18 gesperrt. Die Behältersperre 18 befindet sich hochgestellt in der Bewegungsbahn der Behälter. Die Behälter C, B, A befinden sich in einer gesicherten Stau- oder Wartestellung vor der Füllstation.

Für ein Befüllen der (oben offenen) Behälter mit kommissionierten Artikeln 3 wird die Behältersperre 18 gelöst. Durch Antrieb der beiden letzten Rollen 19 in Förderrichtung gelangt der Behälter A vereinzelt in den Eingangsbereich der Füllstation 4.

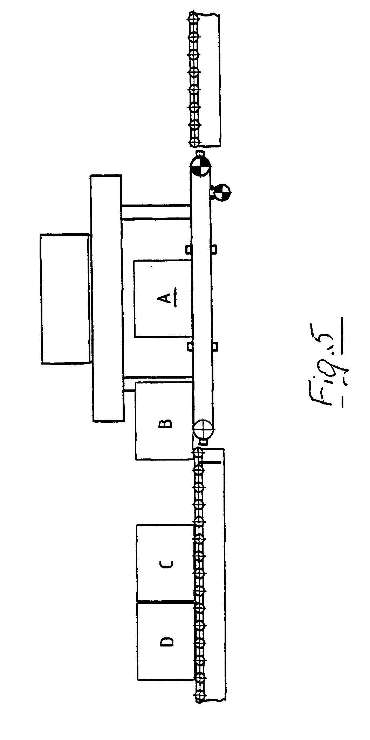

Der Zahnriemen- oder Kettentrieb 6 ist stillstehend und befindet sich mit seinen sechs Noppen 8 in der in Figur 4 gezeigten Stellung (zwei Noppen 8 im Rollenumlenkbereich, zwei Noppen 8 im Obertrum, welche exakt die zum Fülltrichter 5 ausgerichtete Füllstellung definieren, sowie zwei Noppen 8 im Untertrum des Zahnriementriebs 6, welche exakt zu den Noppen 8 im Obertrum ausgerichtet sind).

Der separate Riementrieb 10 zwischen dem Zahnriementrieb 6 ist durch den Antrieb 11 kontinuierlich angetrieben.

Durch die vorgenannte Betriebsweise der Triebe 6 und 10 gelangt der Behälter A in die in Figur 4 gezeigte Stellung, d.h. der Riementrieb 10 fördert den Behälter A bis an den Anschlag bzw. den gemäß Zeichnung linken Noppen 8 des Obertrums des Zahnriementriebs, wobei durch geeignete Einbindung des Signals eines Sensors 23 (insbesondere Triggerlichtschranke) das Anschlagen des Behälters A am Noppen 8 überwacht wird. Da der Behälter A durch die angetriebenen (Beschleunigungs-)Rollen 19 vereinzelt wird, entsteht zum im Stauraum befindlichen Behälter B ein Abstand zum Behälter A, so daß die Behältersperre 18 wieder in die gesperrte Stellung gemäß Figur 4 bewegt werden kann, sobald das Signal des Sensors 23 (Triggerlichtschranke) durch den ankommenden Behälter B ausgelöst worden ist, wobei in der gesperrten Stellung nunmehr der Behälter B gegen die Sperre 18 anschlägt.

Nunmehr wird der Behälter A der Figur 4 durch plötzliche Inbetriebnahme des Zahnriementriebs 6 beschleunigt in die Füllstellung gemäß Figur 5 um eine Noppenteilung unter Verwendung einer geeigneten nachfolgend noch beschriebenen Sensorik 21 weggetaktet. Der gemäß Figur 4 linke Noppen 8 der Umlenkrolle gelangt hierbei hinter den Behälter A in einen formschlüssigen Eingriff mit dem Behälter A, so daß ein Rutschen des Behälters A auf dem Zahnriementrieb bei einem Beschleunigen zuverlässig vermieden ist. Der gleiche Noppen 8 bildet bei Stillstand des Zahnriementriebs 6 dann wieder einen Anschlag für den nachfolgend zugeführten Behälter B, der nach einem Lösen der Behältersperre 18 wieder in die Füllstation 4 gelangt, wie der zuvor in Verbindung mit Figur 3 beschriebene Behälter A.

In der Füllstellung des Behälters A gemäß Figur 5 wird nun der Behälter mit Artikeln 3 befüllt. Im Verlauf des Füllens gelangt der Behälter B in seine Anschlagstellung gemäß Figur 6.

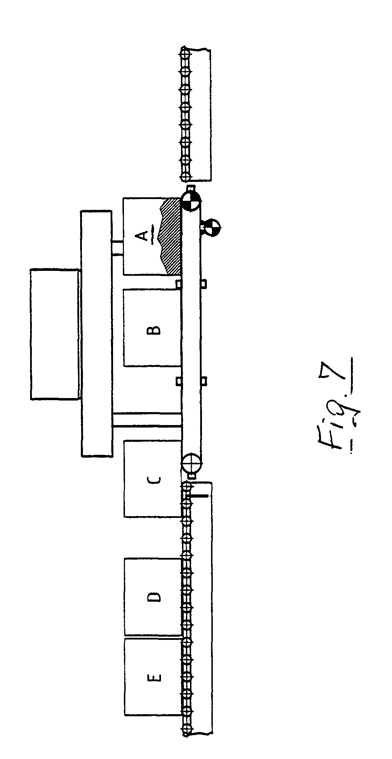

Ist der Füllvorgang abgeschlossen und signalisiert der Sensor 23 die korrekte Position des Behälters B am Noppen 8, wird abermals der Zahnriemen- oder Kettentrieb 6 beschleunigt um eine Noppenteilung unter Verwendung der vorgenannten Sensorik 21 weitergetaktet, wie dies in Figur 7 gezeigt ist.

Die Sensorik 21 umfaßt einen Sensor, der eine bestimmte Stellung eines Noppens 8 dedektiert, zum Beispiel den rechten Noppen 8 des Untertrums des Zahnriemen- oder Kettentriebs nach Figur 1. Stellt der Sensor (wieder) die Anwesenheit eines Noppens an dieser Stelle fest, wird über ein Signal der Antrieb 7 des Zahnriemen- oder Kettentriebs ausgeschaltet.

Das Einschalten des Zahnriemen- oder Kettentriebs 6 erfolgt unter Verwendung eines nicht veranschaulichten Sensors im Fülltrichterbereich oder im Bereich eines sich in der Füllstellung befindlichen Behälters, der den vollen Füllzustand des Behälters erfaßt oder durch ein Signal der Rechnersteuerung, daß der Befüllvorgang zu Ende ist, und dann ein Schaltsignal zum Weitertakten dem Antrieb 7 übermittelt. Letztgenannter Sensor bzw. Signal wird gleichermaßen zuvor auch zum Ausschalten des Füllvorgangs verwendet.

Wesen der Erfindung ist es nun, daß selbst ein voller bzw. gefüllter Behälter A mit einem vergleichsweise großen Gewicht schnell ohne Schlupf bzw. Rutschen auf der Unterlage formschlüssig durch den bzw. die zugeordneten Noppen 8 des Zahnriemen- oder Kettentriebs 6 gemäß Figur 7 nach rechts bewegt wird. Die Noppenteilung ist so getroffen, daß ein Beschädigen des Behälters ausgeschlossen ist und der zugeordnete Beschleunigungs- Noppen den Behälter ruckfrei hintergreift. Entspricht die Noppenteilung nicht der Behälterlänge, kann der Noppen erst langsam in einen Eingriff mit der Behälterrückseite gefahren und erst dann der Behälter voll beschleunigt werden. Entsprechend wird also ein diesbezüglicher Stellmotor 7 gesteuert.

Durch die Erfindung können also die Behälter vereinzelt, extrem schnell in die Füllstellung und auch exakt positioniert werden, ohne daß die Behälter beschädigt werden. Gleichermaßen können die gefüllten Behälter wieder aus der Füllstellung extrem schnell und ohne Beschädigung wieder entfernt werden. Die Durchlaufzeit des Behälters in der Füllstation wird also nahezu ausschließlich durch den Füllvorgang selbst und nicht durch den Transport bestimmt.

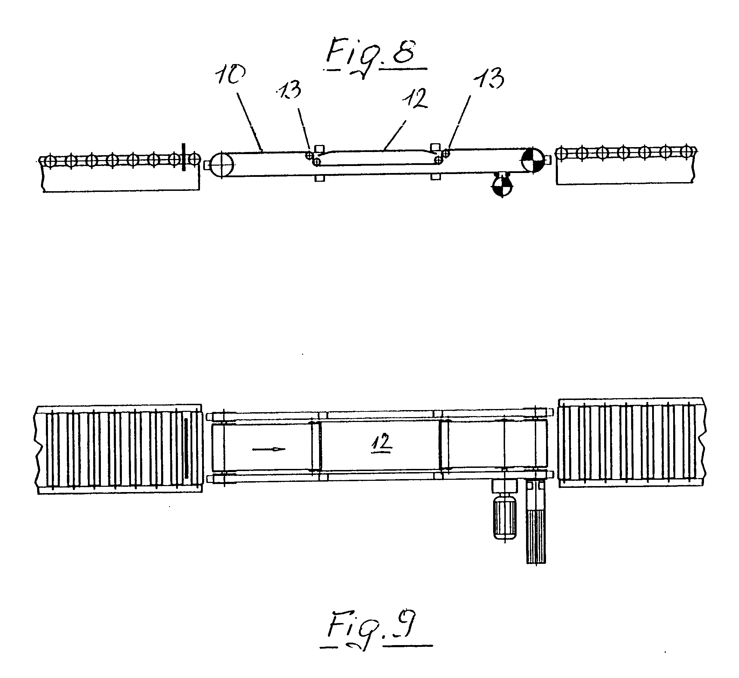

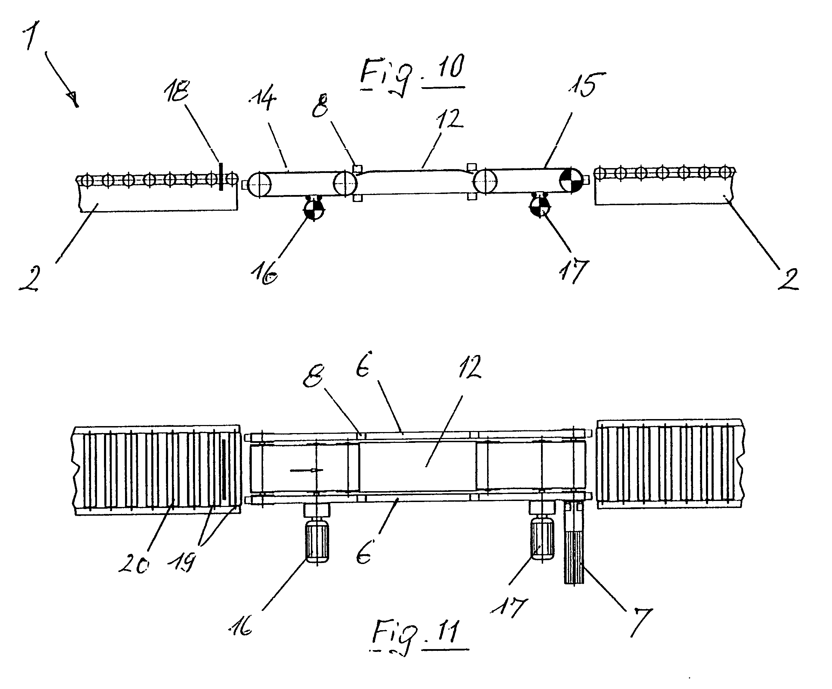

In den Figuren 8 und 9 ist zusätzlich der (kontinuierlich betriebene) Gurtförderer bzw. Riementrieb 10 im Bereich der Füllstellung mit einer stationären oberen Gleitfläche 12 versehen. Der Gurtförderer bzw. Riementrieb ist hierbei im Bereich der Gleitfläche 12 über Umlenkrollen 13 nach unten parallelversetzt. Dadurch befindet sich ein Behälter beim Befüllen auf einer festen Unterlage.

Bei dem in den Figuren 10 und 11 veranschaulichten Ausführungsbeispiel besitzt die im Bereich des umlaufenden Zahnoder Kettentriebs 6 unterbrochene Förderstrecke 2 zwei Gurtförderer bzw. Riementrieb 14, 15 mit jeweils eigenem Antrieb 16 bzw. 17. Der eine Gurtförderer bzw. Riementrieb 14 befindet sich hierbei vor der Füllstellung und der andere Gurtförder bzw. Riementrieb 15 nach der Füllstellung, während im direkten Bereich der Füllstellung eine stationäre Gleitfläche 12 wie vorgenannt vorgesehen ist. Dadurch kann der Eingang der Füllstation unabhängig vom Ausgang vorzugsweise mit unterschiedlicher Geschwindigkeit betrieben werden.

Es versteht sich, daß sämtlichen Bewegungsvorgänge des Anund Weitertransports von Behältern im Bereich der Füllstation 4 sowie der Füllvorgang selbst von einem Zentralrechner der Kommissionieranlage gesteuert werden können, wobei zum Erkennen eines vordersten Behälters und zum Zuordnen des Behälters zum Füllgut eine Behälterlesung 21 im Bereich der Füllposition gemäß Figur 2 vorgesehen sein kann (z.B. Barcodelesung).

## Patentansprüche

1. Kommissionierautomat-Anordnung (1) mit einer Füllstation (4) und einer Förderstrecke (2) mit einem Förderer, wie ein Band und/oder eine Rollenbahn mit einem kontinuierlichen Antrieb (10), zu und von der Füllstation (4) zum Fördern von oben offenen Behältern (A, B, C, D, E), die in der Füllstation (4) in einer angehaltenen Füllstellung mit Artikeln (3) oder Schüttgut über einen Fülltrichter (5) befüllt werden, wobei die Förderstrecke (2) im unmittelbaren Bereich vor, in und nach der Füllstation (4) auch zumindest einen umlaufenden Zahnriemenoder Kettentrieb (6) mit eigenem intermittierenden dynamischen Stellantrieb (7) und voneinander beabstandeten Behälter-Eingriffsnoppen (8) aufweist, und Mittel (21-23) zur Ansteuerung des Stellantriebs (7) dergestalt vorgesehen sind, daß voneinander beabstandete Behälter-Eingriffsnoppen (8) auf der Förderstrecke (2) ankommende Behältern (A, B, C, D, E) ruckfrei hintergreifen und die Behälter vereinzelt zwischen zwei benachbarten Behälter-Eingriffsnoppen sowohl in die Füllstellung hinein als auch nach einem Befüllen aus der Füllstellung heraus beschleunigen.

2. Anordnung nach Anspruch 1,
**dadurch gekennzeichnet,**
**daß** der umlaufende Zahnriemen- oder Kettentrieb (6) auf beiden Breitseiten des Förderers angeordnet und axialsymmetrisch zum Förderer aufgebaut ist.

3. Anordnung nach Anspruch 1 oder 2,
**dadurch gekennzeichnet,**
**daß** ein einziger umlaufender Zahnriemen- oder Kettentrieb (6) im unmittelbaren Bereich vor, in und nach der Füllstation (4) mit auf dem Umlauf vorzugsweise sechs gleich beabstandeten Behälter-Eingriffsnoppen (8) vorgesehen ist.

4. Anordnung nach Anspruch 3,
**dadurch gekennzeichnet,**
**daß** ein einziger durchgehender Förderer vor, in und nach der Füllstation (4), vorzugsweise als Gurtförderer bzw. Riementrieb, zwischen einem axial symmetrisch aufgebauten umlaufenden Zahnriemen- oder Kettentrieb vorgesehen ist.

5. Anordnung nach Anspruch 3,
**dadurch gekennzeichnet,**
**daß** der Förderer im Bereich des umlaufenden Zahnriemenoder Kettentriebs (6) unterbrochen ist und einen separaten Gurtförderer bzw. Riementrieb (10) mit einem eigenen Antrieb (11) aufweist.

6. Anordnung nach Anspruch 5,
**dadurch gekennzeichnet,**
**daß** der vor dem Zahnriemen- oder Kettentrieb (6) gelegene eingangsseitige Förderer ein Förderband, eine staudrucklose Staurollenbahn oder eine staudruckbehaftete Treibrollenbahn ist.

7. Anordnung nach Anspruch 5 oder 6,
**dadurch gekennzeichnet,**
**daß** der Gurtförderer bzw. Riementrieb (10) im Bereich der Füllstellung eine stationäre obere Gleitfläche (12) besitzt, wobei der Gurtförderer bzw. Riementrieb im Bereich der Gleitfläche (12) über Umlenkrollen (13) nach unten parallelversetzt ausgebildet sein kann.

8. Anordnung nach einem der Ansprüche 3 bis 7,
**dadurch gekennzeichnet,**
**daß** der Förderer im Bereich des umlaufenden Zahnriemenoder Kettentriebs (6) unterbrochen ist und zwei weitere Gurtförderer bzw. Riementriebe (14, 15) mit jeweils eigenem Antrieb (16; 17) aufweist, wobei der eine Gurtförderer bzw. Riementrieb (14) vor der Füllstellung und der andere Gurtförder bzw. Riementrieb (15) nach der Füllstellung angeordnet ist und im Bereich der Füllstellung eine stationäre Gleitfläche (12) vorgesehen ist.

9. Anordnung nach einem der Ansprüche 1 bis 8,
**dadurch gekennzeichnet,**
**daß** der eingangsseitige Förderer vor dem Zahnriemenoder Kettentrieb (6) eine Behältersperre (18) aufweist, welche in die Bewegungsbahn der geförderten Behälter gestellt werden bzw. die Bewegungsbahn der geförderten Behälter freigeben kann.

10. Anordnung nach Anspruch 9,
**dadurch gekennzeichnet,**
**daß** die Behältersperre (18) ein pneumatisch verschwenk- bzw. verschiebbarer Riegel ist.

11. Anordnung nach Anspruch 9 oder 10,
**dadurch gekennzeichnet,**
**daß** die Behältersperre (18) zwischen zwei Laufrollen (19) am Ende des eingangsseitigen Förderers angeordnet ist.

12. Anordnung nach Anspruch 11,
**dadurch gekennzeichnet,**
**daß** die beiden Laufrollen (19) im Betrieb eine größere Umfangsgeschwindigkeit besitzen als die restlichen Laufrollen (20) oder Umlenkantriebsrollen eines eingangsseitigen Förderers, wobei sämtliche Laufrollen (19, 20) einen gemeinsamen Antrieb besitzen können.

13. Anordnung nach Anspruch 11,
**dadurch gekennzeichnet,**
**daß** die beiden Laufrollen (19) einen eigenen Antrieb besitzen, wobei der eigene Antrieb schneller betrieben werden kann als der Antrieb der restlichen Laufrollen (20) oder der Umlenkantriebsrollen eines eingangsseitigen Förderers, und sämtliche Rollen einen gleichen Durchmesser aufweisen.

## Claims

1. Automatic commissioning unit arrangement (1) comprising a filling station (4) and a conveying track (2) with a conveyor, for instance a belt conveyor and/or a roller conveyor having a continuous drive (10) to and from said filling station (4) for conveying containers (A, B, C, D, E), which are open at the top and are filled with articles (3) or bulk material via a feed hopper (5) in said filling station (4) in a stopped filling position, wherein said conveying track (2) has, in the immediate area in front of, in and after the said filling station (4), further at least one circulating toothed belt or chain drive (6) with a dynamic adjusting drive (7) of its own and with container-engaging knobs (8), which are located at spaced locations from one another, and means (21-23) to control said adjusting drive (7) in a manner that container-engaging knobs (8) which are located at spaced locations from one another, grasp behind said containers (A, B, C, D, E) arriving on said conveying track (2) without a jerk and accelerate said containers, in a separated manner between two adjacent container-engaging knobs, both into the filling position and out of the filling position after the filling.

2. Arrangement in accordance with claim 1,
**characterized in that**
said circulating toothed belt or chain drive (6) is arranged on both broad sides of the conveyor and is axially symmetrical to the conveyor.

3. Arrangement in accordance with claim 1 or 2,
**characterized in that**
a single circulating toothed belt or chain drive (6) with preferably six container-engaging knobs (8) spaced at equal distances from one another over the run in the immediate area in front of, in and after said filling station (4) is provided.

4. Arrangement in accordance with claim 3,
**characterized in that**
a single passing through conveyor, preferably a belt conveyor or belt drive, between said circulating toothed belt or chain drive (6), which is axially symmetrical to the conveyor, is provided in front of, in and after said filling station (4).

5. Arrangement in accordance with claim 3,
**characterized in that**
said conveyor is interrupted in the area of said circulating toothed belt or chain drive (6) and has a separate belt conveyor or belt drive (10) with a drive (11) of its own.

6. Arrangement in accordance with claim 5,
**characterized in that**
the input-side conveyor located in front of said toothed belt or chain drive (6) is a conveyor belt, an accumulating roller conveyor not subject to the pressure of said articles or a driving roller conveyor subject to the pressure of said articles.

7. Arrangement in accordance with claim 5 or 6,
**characterized in that**
said belt conveyor or belt drive (10) has a said stationary upper sliding surface (12) in the area of the filling position, wherein the belt conveyor or belt drive may be offset downward in parallel by means of deflecting rollers (13) in the area of said sliding surface (12).

8. Arrangement in accordance with one of the claims 3 through 7,
**characterized in that**
said conveyor is interrupted in the area of said circulating toothed belt or chain drive (6) and has two additional belt conveyors or belt drive (14, 15) with separate drives (16; 17), wherein one said belt conveyor or belt drive (14) is arranged in front of the filling position and the other said belt conveyor or belt drive (15) is arranged after the filling position and said stationary sliding surface (12) is provided in the area of the filling station.

9. Arrangement in accordance with one of the claims 1 through 8,
**characterized in that**
in front of said toothed belt or chain drive (6), said input-side conveyor has a container-blocking mechanism (18), which can be placed into the path of movement of the containers being delivered and can release the path of movement of the containers being delivered.

10. Arrangement in accordance with claim 9,
**characterized in that**
said container-blocking mechanism (18) is a pneumatically pivotable or displaceable locking bar.

11. Arrangement in accordance with claim 9 or 10,
**characterized in that**
said container-blocking mechanism (18) is arranged between two rollers (19) at the end of said input-side conveyor.

12. Arrangement in accordance with claim 11,
**characterized in that**
said two rollers (19) have a higher circumferential velocity during the operation than the other rollers (20) or deflecting drive rollers of an input-side conveyor, wherein all said rollers (19, 20) may have a common drive.

13. Arrangement in accordance with claim 11,
**characterized in that**
said two rollers (19) have a drive of their own, wherein the own drive can be operated at a higher speed than the drive of said other rollers (20) or of said deflecting drive rollers of an input-side conveyor, and all rollers have the same diameter.

## Revendications

1. Disposition d'automate d'approvisionnement (1) avec une station de remplissage (4) et un chemin de transport (2) avec un transporteur, comme par exemple une bande et / ou une piste à rouleaux avec un entraînement continu (10) vers et à partir d'une station de remplissage (4) pour transporter des récipients ouverts vers le haut (A, B, C, D, E) lesquels sont remplis au moyen d'un entonnoir de remplissage (5) dans une station de remplissage (4) dans une position de remplissage arrêtée avec des articles (3) ou de la matière en vrac; le chemin de transport (2) comportant dans la zone directement avant, dans ou après la station de remplissage (4), également au moins un entraînement de réglage (7) intermittent dynamique et des tiges d'engrènement de récipient (8) éloignées l'une de l'autre ; des moyens (21 à 23) pour commander l'entraînement de réglage (7) étant prévus de manière à ce que des tiges d'engrènement de récipient (8) éloignées l'une de l'autre saisissent par derrière sans secousses des récipients (A, B, C, D, E) arrivant sur le chemin de transport (2) et que les récipients accélèrent individuellement entre deux tiges d'engrènement de récipient voisines vers la position de remplissage et aussi après le remplissage à partir de la position de remplissage.

2. Disposition selon la revendication 1, **caractérisée en ce que** l'entraînements à courroie dentée et à chaîne (6) circulant de façon continue, est disposée sur les deux côtés de la largeur du transporteur et est construit de façon symétrique par rapport à l'axe du transporteur.

3. Disposition selon la revendication 1 ou 2, **caractérisée en ce qu'**un seul entraînement à courroie dentée et à chaîne (6) circulant de façon continue est prévu dans la zone directement avant, dans ou après la station de remplissage (4) avec de préférence six tiges d'engrènement de récipient (8) circulant de façon continue et éloignées de façon identique l'une de l'autre.

4. Disposition selon la revendication 3, **caractérisée en ce que** l'on a prévu un seul transporteur continu avant, dans et après la station de remplissage, de préférence en tant que transporteur à courroie ou à entraînement à courroie, entre un entraînement à courroie dentée ou à chaîne circulant de façon continue et étant construit de façon axiale ainsi que

5. Disposition selon la revendication 3, **caractérisée en ce que** le transporteur est interrompu dans la zone de l'entraînement à courroie dentée et à chaîne (6) circulant de façon continue et comporte un entraînement à courroie dentée et à chaîne (10) avec son propre entraînement (11).

6. Disposition selon la revendication 5, **caractérisée en ce que** le transporteur du côté de l'entrée situé avant l'entraînement à courroie dentée ou à chaîne (6) est une bande de transport, un transporteur à engorgement à rouleaux sans pression d'engorgement ou un transporteur à entraînement à rouleaux avec pression d'engorgement.

7. Disposition selon la revendication 5 ou 6, **caractérisée en ce que** le transporteur à courroie dentée ou l'entraînement à courroie comporte dans la zone de remplissage, une surface de glissement (12) supérieure, stationnaire où l'entraînement à courroie dentée ou à chaîne (6) peut être réalisé dans la zone de la surface de glissement (12) sur des rouleaux de déviation (13), lequel transporteur ou l'entraînement sont décalés parallèlement vers le bas.

8. Disposition selon la revendication 3 à 7, **caractérisée en ce que** le transporteur est interrompu dans la zone de l'entraînement à courroie dentée et à chaîne (6) circulant de façon continue et comporte deux entraînements à courroie dentée et à chaîne (14, 15) supplémentaires avec à chaque fois son propre entraînement (16; 17), où un des entraînements à courroie dentée ou à chaîne (14) est disposé avant la position de remplissage et l'autre entraînement à courroie dentée ou à chaîne (15) est disposé après la position de remplissage, et une surface de glissement (12) stationnaire étant prévue dans la zone de la position de remplissage.

9. Disposition selon la revendication 1 à 8, **caractérisée en ce que** le transporteur situé du côté de l'entrée comporte avant l'entraînement à courroie ou à chaîne (6) un barrage de récipient (18) qui peut être posé dans la piste de mouvement des récipients transportés ou qui peut libérer la piste de mouvement des récipients transportés.

10. Disposition selon la revendication 9, **caractérisé en ce que** le barrage de récipients (18) est un verrou susceptible d'être pivoté ou déplacé de façon pneumatique.

11. Disposition selon la revendication 9 ou 10, **caractérisé en ce que** le barrage de récipients (18) est disposé entre deux rouleaux (19) à la fin du transporteur situé du côté de l'entrée.

12. Disposition selon la revendication 11, **caractérisé en ce que** les deux rouleaux (19) présentent, pendant le service, une plus grande vitesse circonférentielle par rapport aux rouleaux restants (20) ou les rouleaux d'entraînement de déviation d'un transporteur du côté de l'entrée, où tous les rouleaux (19, 20) peuvent comporter un entraînement commun.

13. Disposition selon la revendication 11, **caractérisé en ce que** les deux rouleaux (19) comportent leur propre entraînement , où cet entraînement peut être entraîné plus rapidement que l'entraînement des rouleaux restants (20) ou des rouleaux d'entraînement de déviation d'un transporteur du côté de l'entrée, et **en ce que** tous les rouleaux présentent le même diamètre.
